# EUROPÄISCHE PATENTSCHRIFT

(11) **EP 1 917 510 B1**
(45) Veröffentlichungstag und Bekanntmachung des Hinweises auf die Patenterteilung: **05.12.2012**
(21) Anmeldenummer: 06761226.7
(22) Anmeldetag: 18.07.2006
(51) Int. Cl.: G01L 11/02

(54) **OPTISCHER INTERFEROMETRISCHE DRUCKSENSOR**
OPTICAL INTERFEROMETRIC PRESSURE SENSOR
CAPTEUR DE PRESSION INTERFEROMETRIQUE OPTIQUE

(30) Priorität: 12.08.2005 US 707770 P
(43) Veröffentlichungstag der Anmeldung: 07.05.2008
(73) Patentinhaber: Inficon GmbH, 7310 Bad Ragaz (CH)
(72) Erfinder: WÄLCHLI, Urs, CH-7000 Chur (CH); BJÖRKMAN, Per, FIN-22310 Palsböle (FI); SAARI, Heikki, FIN-02620 Espoo (FI); ANTILA Jarkko, FIN-00320 Helsinki (FI); HANSELMANN, Hansjakob, CH-9497 Oberschan (CH); WÜEST, Martin, CH-7208 Malans (CH)
(74) Vertreter: Wegmann, Urs
(86) Internationale Anmeldenummer: PCT/CH2006/000375
(87) Internationale Veröffentlichungsnummer: WO 2007/019714

(56) Entgegenhaltungen:
- US-A- 4 589 286
- US-A1- 2002 003 917
- US-B1- 6 591 687

## Beschreibung

Die Erfindung bezieht sich auf eine Vakuummesszelle nach dem Oberbegriff von Anspruch 1 und auf ein Verfahren zur Herstellung einer Messzelle nach dem Oberbegriff von Anspruch 21.

Bekannt sind Membranmesszellen für die Messung von hohen Drücken bei welchen die Deformation der Membrane bei angelegtem Druck mit Hilfe von Licht gemessen wird, das auf die Oberfläche der Membran gerichtet ist, wobei das reflektierte Licht interferometrisch ausgewertet wird und ein Mass für die Durchbiegung der Membrane bzw. des zu messenden Druckes darstellt.

In der US 4,589,286 wird ein derartiger Membrandruckmesszelle beschrieben, die für hohe Drucke, wie zum Beispiel bis zu 690 KPa (6,9 bar) eingesetzt werden kann bei hohen Temperaturen bis 500°C. Der Sensor ist speziell für den Einsatz im Gaspfad in Flugzeugtriebwerken konzipiert. Die bekannten Sensoren mit Metallmembrane sind dafür nicht geeignet. Deshalb soll die Membrane, wie auch die Trägerplatte vollständig aus Silica (SiO₂) hergestellt werden. Die Membrane aus Silica ist an der Trägerplatte befestigt und bildet dazwischen einen spaltförmigen Hohlraum. Innerhalb der Trägerplatte sind Blindbohrungen vorgesehen in welche eine index Stablinse eingeführt ist, die an den Hohlraum angrenzend plaziert ist, wobei an diese anschliessend eine Glasfaser herangeführt ist zur Ein- und Auskopplung des Lichtes auf die Rückseite der Membrane innerhalb dieses Hohlraumes.

Eine weitere, ähnliche Ausbild einer Membrandruckmesszelle ist in der US 2002/0003917 A1 beschrieben. Diese Messzelle soll ebenfalls geeignet sein für die Anwendung bei hohen Temperaturen und hohen Drucken und ist vorgesehen für den Einsatz in Verbrennungsräumen von Verbrennungsmotoren. Dazu wird die Messzelle vollständig aus Silizium hergestellt. Die Membrane wird durch Mikro Lithographie ausgebildet und schliesst ebenfalls einen Hohlraum (Kavität) ein und ist an einer Basisschicht (Trägerplatte, Chip) aus Silizium angeordnet. Die Glasfaser wird unmittelbar mit ihrer Endfläche an den Hohlraum angrenzend über eine Bohrung in der Basisschicht angeordnet. Die Bohrung soll derart ausgebildet sein, dass die Glasfaser einfach eingesteckt werden kann. Sie kann aber auch befestigt werden mit Hilfe beispielsweise eines Polymerklebers oder einem Glaslot. Weiter werden Massnahmen beschrieben zur Positionierung der Faser in korrektem Abstand gegenüber der Membrane bzw. des Hohlraumes indem ein Anschlag ausgebildet werden soll mit Hilfe einer weiteren Zwischenschicht als Faserstop.

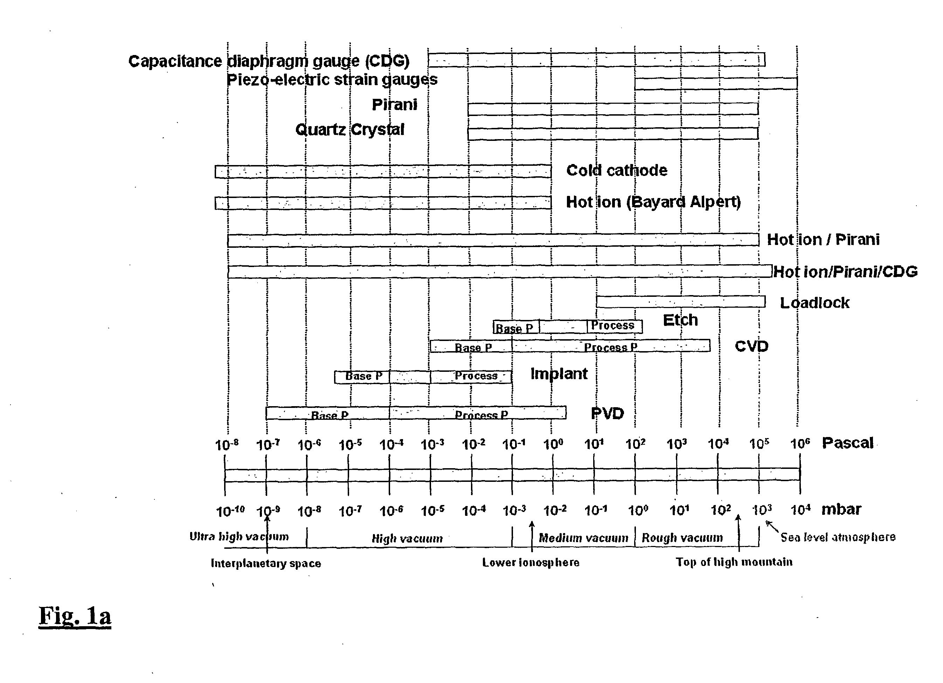

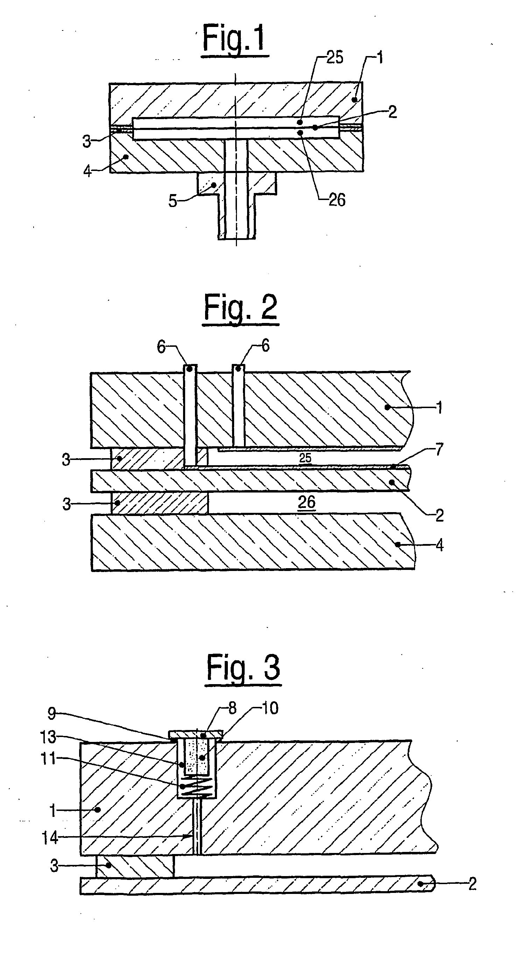

Die Halbleiterindustrie stellt Halbleiter her unter Verwendung von unter anderem folgenden Techniken: Chemical Vapor Deposition (CVD), Physical Vapor Deposition (PVD), Implantieren und (trocken) Ätz - Prozesse. Typische Druckbereiche für die Prozesse in der Halbleiterindustrie und Druckbereiche von Vakuummesszellen werden gezeigt in der Figur 1 a. Wie in Figur 1a gezeigt, arbeiten diese Prozesse typischerweise im Bereich von 10⁻⁴ bis 10 mbar. Typische Prozessmesszellen für die Anwendungen sind kapazitive Membranmesszellen.

Es wird erwartet, dass die Marktnachfrage nach Hochtemperatur Membran-messzellen in den nächsten Jahren ansteigt, vor allem aufgrund der Einführung von Atomic Layer Deposition (ALD) in Halbleiterherstellungsprozessen, welche Druckmessungen bei Temperaturen bis zu 300 ° C oder potentiell sogar höher in bestimmten Anwendungen benötigen. Der Geräteaufbau für ALD Prozesse ist sehr ähnlich zu dem von Low Pressure CVD (LPCVD) oder CVD Geräten, welche heutzutage die bedeutendsten Abnehmer sind von Hochtemperatur - Kapazitätsmembran - Messzellen (CDGs) mit Temperaturen bis zu 200 ° C.

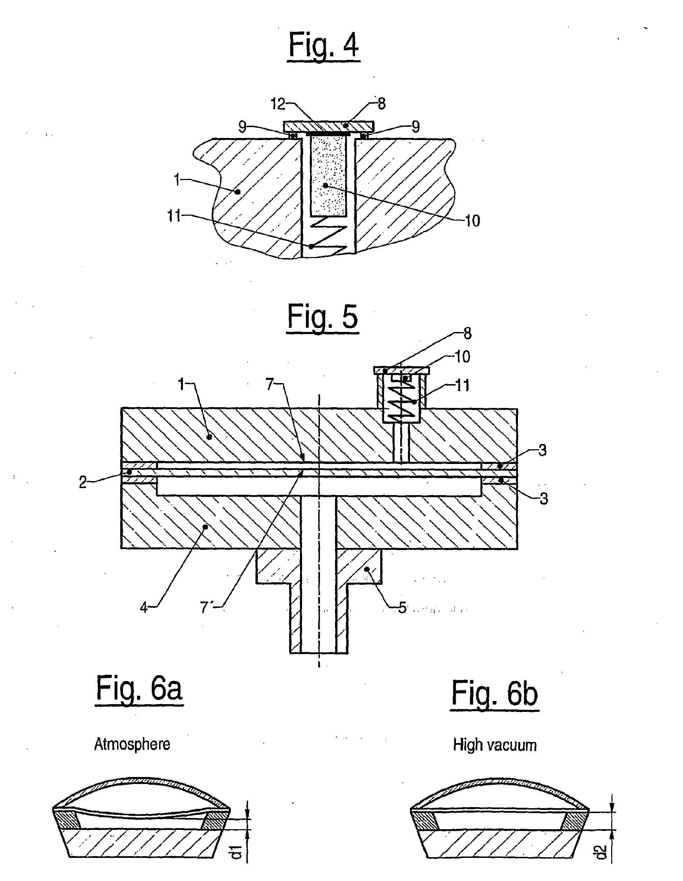

Eine kapazitive Membranmesszelle (CDG) basiert auf der elastischen Deformation einer dünnen Membran, welche über einem massiven Körper aufgehängt ist und somit zwei Räume voneinander trennt. Eine Druckänderung in diesen Räumen veranlasst die Membran sich zu bewegen. Die Distanz zwischen dem Gehäuse und der Membran verändert sich. Bei hohen Drücken wird die Membrane stärker ausgelenkt als bei niedrigen Drücken (siehe Fig. 1, Fig. 6a und Fig. 6b). Metallische Elektroden sind im Spaltbereich an der Membran und am Grundkörper welcher der Membran gegenüber liegt angebracht. Diese beiden Metallelektroden formen eine Kondensator - Kapazität. Die Kapazitätsänderung ist somit ein Mass für die Druckänderung. Diese Messprinzip ist Gasart unabhängig.

Es ist bekannt, Drücke bzw. Druckdifferenzen dadurch zu messen, indem eine dünne Membran druckbeaufschlagt wird und ihre Durchbiegung gemessen wird. Eine bekannte und geeignete Methode, die Durchbiegung solcher Membranen zu messen besteht darin, dass die Membrananordnung als variable elektrische Kapazität ausgebildet wird, wobei über eine Messelektronik in bekannter Weise die Kapazitätsänderung ausgewertet wird, welche mit der Druckänderung korreliert. Die Kapazität wird ausgebildet, indem die dünne, biegsame Membranfläche in geringem Abstand gegenüber einer weiteren Fläche angeordnet ist und beide einander gegenüberliegenden Oberflächen mit einem elektrisch leitenden Belag beschichtet oder aus elektrisch leitfähigem Material sind. Bei Druckbeaufschlagung der Membran verändert sich durch die Durchbiegung der Abstand zwischen den beiden Elektroden, was zu einer auswertbaren Kapazitätsänderung der Anordnung führt. Sensoren dieser Art werden in grossen Stückzahlen aus Silizium hergestellt. Sowohl der flächige Grundkörper wie auch die Membran bestehen hierbei oft vollständig aus Silizium - Material. Es gibt auch Ausführungen mit kombinierter Materialzusammensetzung z.B. Silizium mit Glasunterlage. Die Sensoren lassen sich dadurch kostengünstig herstellen. Für Vakuumanwendungen sind Drucksensoren dieser Art in der Regel nur für höhere Druckbereiche im Bereich von ca. 10⁻¹ mbar bis einige bar einsetzbar. Hohe Auflösung bei tieferen Drücken ab etwa 10⁻¹ mbar sind mit dem Werkstoff Silizium nicht mehr realisierbar. Unter anderem rührt dies daher, dass das Silizium an der Oberfläche mit der Umgebung reagiert und so die empfindliche Sensorcharakteristik gestört wird. Bereits Wasserdampf, der in normaler atmosphärischer Luft enthalten ist, führt zu entsprechenden Reaktionen an den Oberflächen. Das Problem wird zusätzlich verschärft, wenn der Sensor in chemisch aggressiven Atmosphären eingesetzt wird. Es wurde deshalb versucht, solche Silizium - Sensoren durch Passivieren der Oberflä= chen gegenüber aggressiven Ausseneinflüssen zu schützen. Es wurde auch versucht, die Oberfläche mit Schutzüberzügen zu versehen, damit die Haltbarkeit und Resistenz gegenüber der chemisch aggressiven Umgebung erhöht wird, wie dies in DE 41 36 987 beschrieben ist. Solche Massnahmen sind kostenaufwendig und führen bei mechanisch deformierbaren Teilen, wie Membranen, nur bedingt zum Erfolg, insbesondere bei besonders aggressiven Medien, wie Fluor, Bromsäure und deren Verbindungen, wie sie bei Vakuumätzverfahren eingesetzt werden.

Es wurde deshalb versucht, Druckmesszellen für Vakuumanwendungen vollständig aus korrosionsfesten Materialien wie Al₂O₃ herzustellen. Eine bekannte Anordnung dieser Art wurde veröffentlicht in USP 6,591,687, welche in ihrer Gesamtheit integrierender Bestandteil dieser Erfindung ist.

Diese kapazitive Vakuummesszelle ist vollständig aus einer Keramik, wie insbesondere Al₂O₃ hergestellt. Dadurch wird sehr hohe Korrosionsbeständigkeit und langlebige Reproduzierbarkeit erreicht. Nur in Bereichen, wo gedichtet werden muss oder wo Durchführungen vorgesehen sind, werden in geringen Mengen andere Materialien als Al₂O₃ vorgesehen, sofern nicht das Al₂O₃ ohne Fremdmaterialzugabe verschweisst wird. Die Zelle besteht aus einem ersten plattenförmigen Gehäusekörper, über welchem eine Membran im Randbereich dichtend angeordnet ist, so dass diese einen Referenzvakuumraum einschliesst. Auf der dem Referenzvakuumraum abgewandten Seite ist ein zweiter Gehäusekörper ebenfalls im Randbereich dichtend schliessend beabstandet angeordnet, so dass dort ein Messvakuumraum ausgebildet wird. Dieser Messvakuumraum ist mit einem Anschluss für die Zuleitung des zu messenden Mediums versehen. Die Oberflächen des ersten Gehäusekörpers und der Membrane, welche den Referenzvakuumraum ausbilden, sind elektrisch leitend beschichtet, beispielsweise mit Gold, und bilden die Elektroden der Kapazitätsmesszelle. Die Elektroden wiederum sind herausgeführt, beispielsweise durch den ersten Gehäusekörper oder durch den Abdichtungsbereich in der Randzone. Die im Wesentlichen parallel angeordneten Elektrodenflächen weisen einen Abstand im Bereich von 2µm bis 50µm auf. Die Abdichtung der Membran im Randbereich gegenüber den beiden Gehäusen erfolgt vorzugsweise durch Verschweissung, beispielsweise durch Laserschweissen. Sehr geeignet und einfach in der Anwendung ist aber auch ein Glaslot, welches ebenfalls korrosionsbeständig ist. Eine weitere Möglichkeit der dichtenden Verbindung besteht auch darin, Gehäuseteile diffusiv zu verbinden, beispielsweise im Grünkörperstadium, wenn es darum geht, Al₂O₃-fremdes Material vollständig zu vermeiden.

Diese Anordnung der Messzelle ermöglicht im Wesentlichen einen symmetrischen Aufbau, der jegliche Verspannungen im Gehäuse vermeidet. Dies ist besonders wichtig, um eine hohe Messempfindlichkeit zu erreichen und tiefe Messdrücke bei hoher Genauigkeit und Reproduzierbarkeit zu realisieren. Dadurch wird ausserdem ermöglicht, eine sehr dünne Membran aus Keramik zu verwenden, welche zwingend ist, wenn die Messzelle tiefere Vakuumdrücke als 100 mbar, und vor allem tiefer als 10 mbar, zuverlässig mit kapazitiven vollkeramischen Messzellen erfassen soll. Hierzu sind Membrandicken von 10µm bis 250µm notwendig, wobei Membrandicken von 10µm bis 120µm bevorzugt werden, um eine sehr gute Auflösung zu erreichen. Typische Membrandickenbereiche sind beispielsweise:
- bei 1000 Torr Membrandicke 760µm ± 10µm
- bei 100 Torr Membrandicke 345µm ± 10µm
- bei 10 Torr Membrandicke 150µm ± 10µm
- bei 1 Torr Membrandicke 100µm ± 10µm
- bei 0,1 Torr Membrandicke 60µm ± 10µm
- bei 0,01 Torr Membrandicke 40µm ± 10µm

Solch dünne Membranen sind besonders schwierig herzustellen und benötigen nach dem Sinterschritt mindestens einen weiteren Glättungsschritt. Es ist ausserdem besonders wichtig, dass die Membran genügend Heliumdichtheit aufweist, was nur erreicht werden kann, wenn die Korngrössen des Membranmaterials nicht zu gross sind und sich im Bereich von < 20µm bewegen. Kleinere Korngrössen von < 10µm werden bevorzugt, insbesondere solche die < 5µm sind. In jedem Fall sollten im Querschnitt der Membran über die Dicke betrachtet mindestens zwei Körner vorhanden sein, bei mehr als fünf Körnern übereinander sind die Membranen besonders dicht.

Ein weiteres wichtiges Kriterium für die erreichbare Genauigkeit der Messzelle ist die Planarität der Membranfläche. Die Unebenheit über die gesamte Fläche sollte in jedem Fall nicht mehr als 30 % des Elektrodenabstandes betragen, wobei es besser ist, wenn sie nicht mehr als 15 % beträgt. Dies bedeutet, dass die Unebenheit über die gesamte Fläche nicht grösser als 10µm sein sollte, vorzugsweise nicht mehr als 5µm. Die Unebenheit ist hierbei definiert als die Differenz vom tiefsten zum höchsten Punkt. Die Reinheit des verwendeten Aluminiumoxides der Membrane sollte, um entsprechend gute Langzeitstabilität zu erreichen, mindestens 94 % betragen, wobei bevorzugte Werte über 99 % liegen.

Um die Qualität der im Randbereich liegenden Membrandichtung nicht zu beeinflussen, ist, es vorteilhaft, wenn die elektrisch leitenden Schichten über Durchführungen, welche am ersten Gehäusekörper angeordnet sind, herausgeführt werden, und nicht direkt über die Membrandichtung bzw. - Verschweissung.

Der Referenzvakuumraum muss ein langzeitstabiles Vakuum hoher Qualität aufweisen, um die präzise Funktion der Messzelle über lange Zeit gewährleisten zu können. Dazu ist nach dem Abpumpen ein Getter vorzusehen, welcher vorzugsweise in einem kleinen Volumen am ersten Gehäuse angeordnet ist und in Verbindung mit dem Referenzvakuumraum steht. Dieser Getter sorgt dafür, dass der Referenzvakuumdruck tiefer liegt als der zu messende Druck, vorzugsweise aber um mindestens eine Dekade tiefer. Um Verunreinigungen des Innenbereiches der Messzelle zu vermeiden, sollte ein Gettertyp gewählt werden, der nicht verdampfend ist.

Messzellen wie zuvor beschrieben können sehr kompakt und kostengünstig aufgebaut werden. Der Durchmesser einer solchen Zelle kann im Bereich von 5 bis 80 mm liegen, wobei bevorzugterweise die Messzelle einen Durchmesser von 5 bis 40 mm aufweist. Die Dicke einer solchen Zelle liegt hierbei vorzugsweise im Bereich von 2 mm bis 25 mm.

Zur Herstellung einer funktionsfähigen Messzelle mit den vorerwähnten Eigenschaften ist die Einhaltung des entsprechenden Herstellverfahrens sehr wichtig. Insbesondere die Herstellung der dünnen Keramikmembrane erfordert besondere Massnahmen. Sowohl die Membrane wie der ganze Aufbau der Messzelle muss besonders eigenspannungsfrei erfolgen.

Geeignete Membranen aus Al₂O₃ werden dadurch hergestellt, dass, wie im Keramikbereich üblich, zuerst ein Schlicker nach einem bestimmten Rezept gemischt wird und die teigförmige Masse danach auf ein bandförmiges Trägermaterial, beispielsweise eine Kunststoffolie, dünn und gleichmässig aufgebracht wird. Nach dem Trocknen werden diese Folien auf Fehlstellen geprüft, wie Blasen oder Löcher. Die nun vorliegende Masse, welche noch nicht gesintert und somit noch flexibel ist, wird als Grünkörper bezeichnet. Die gewünschte Membranform wird nun aus dem bandförmigen Grünkörpermaterial herausgeschnitten, wobei dieses hierbei noch an der Folie haftet. Geschnitten wird beispielsweise mit Messern, vorzugsweise mit einem Laser. Das Ausschneiden bzw. Ritzen des Grünkörpers muss besonders vorsichtig erfolgen, so dass gegen die Fläche der zukünftigen Keramikmembran an der Schneidkante keine Verwerfungen bzw. Erhebungen das Mass der Welligkeit der Membran mitbestimmend entstehen. Wenn mit dem Messer geschnitten wird, kann hierfür beispielsweise gleichzeitig mit dem Schneidvorgang membranseitig ein Anpressrädchen mitgeführt werden, welches ein zu starkes Aufwerfen des Grünkörpers verhindert. Anschliessend erfolgt ein sorgfältiges Trennen der vorzugsweise in Kreisform ausgeschnittenen Membran von der Folie, indem diese beispielsweise über eine Kante abgezogen wird. Die Membranen werden anschliessend in einem Ofen gesintert.

Für die Sinterung werden die Membranen vorzugsweise auf hart gebrannte, plane Al₂O₃-Platten gelegt und beispielsweise übereinander beabstandet gestapelt und bei typischerweise 1630°C gesintert. Die Temperatur wird während etwa 400 Minuten auf diese 1630°C hochgefahren, also etwa mit 4°C Temperaturanstieg pro Minute, dann einige Minuten, beispielsweise 6 Minuten, auf dieser Temperatur belassen und danach in einem ersten Schritt mit langsamer Temperaturerniedrigung von 3°C pro Minute während etwa 210 Minuten auf 1000°C abgesenkt und in einem weiteren, zweiten Schritt mit einer Temperaturerniedrigung von 6°C in der Minute während etwa 170 Minuten wieder auf Umgebungstemperatur abgekühlt. Es liegt nun eine Keramikmembran vor, die gegenüber dem Grünkörper ein hartes, reines Keramikgefüge aufweist, wobei die Additive des Grünkörpermateriales verdampft sind. Nach diesem Sinterschritt ist die Membrane stark uneben und weist Verwerfungen auf von mehreren Millimetern bei einem Durchmesser von etwa 40 mm.

Die Membrane kann in diesem Zustand, wegen den starken Verwerfungen und Eigenspannungen im Material noch nicht verwendet werden. Die Membrane muss mit mindestens einem weiteren Schritt geglättet werden. Dies erfolgt dadurch, dass die Membrane einem weiteren Heizschritt im Ofen unterzogen wird. Hierbei werden die Membranen vorsichtig zwischen massive und sehr plane hartgesinterte Al₂O₃-Platten (auch "dead"-Al₂O₃, d.h. grosskörnige) gelegt, welche bei einem Membrandurchmesser von 40mm vorzugsweise ein Gewicht von einigen 10 bis einigen 100 Gramm, wie im Beispiel etwa 60 Gramm, aufweisen oder entsprechend beschwert sind. Die Temperatur wird während etwa 390 Minuten mit 4°C pro Minute langsam auf etwa 1570°C hochgefahren. Nach einer kurzen Verweilzeit von einigen Minuten, etwa 25 Minuten, auf dieser Temperatur wird die Temperatur wiederum langsam abgesenkt, während etwa 115 Minuten mit etwa 5°C pro Minute, bis 1000°C erreicht worden sind. Danach wird die Temperatur mit etwa 6°C pro Minute weiter abgesenkt, während etwa 166 Minuten, bis Umgebungstemperatur erreicht wird. Nach einem solchen Glättungsschritt erscheint die Membran nur noch mit einer sehr geringen Verwerfung von einigen zehntel Millimetern. Wichtig bei diesem Glättungsschritt ist, dass die Temperatur gegenüber dem ersten Sinterheizschritt weniger hoch ist, vorzugsweise bis maximal 100°C unter der Sintertemperatur liegt. Um gute Ergebnisse zu erzielen, wie sie für die geforderte Messzellenqualität notwendig sind, muss dieser Glättungsheizschritt mindestens zweimal durchgeführt werden.

Aus wirtschaftlichen Gründen sollten die Glättungsheizschritte so durchgeführt werden, dass nicht mehr als zwei Glättungsschritte notwendig sind. Besonders gute Ergebnisse werden dadurch erzielt, dass zwischen den Glättungsheizschritten die Membran sorgfältig von der Platte abgelöst wird und in etwas versetzter Position wieder abgelegt wird. Sie kann mit Vorzug sogar umgedreht abgelegt werden. Die Verwendung eines Stapels von mehreren planen Platten mit dazwischenliegenden Membranen macht die Anordnung besonders wirtschaftlich. Es liegen nun Membranen vor, die wahlweise Dicken im Bereich von 10µm bis 250µm, vorzugsweise < 120µm aufweisen können. Mit dem vorliegenden Verfahren können Planitäten der Membranen erreicht werden, die besser als 10µm über die gesamte Fläche sind, vorzugsweise sogar besser als 5µm. Die Körner des Membranmateriales sind dabei im Mittel kleiner als 20µm, vorzugsweise kleiner als 10µm, wobei sogar solche, die kleiner als 5µm sind erzielt werden können. Dadurch kann auch die Forderung, dass über die Dicke mindestens zwei Körner vorhanden sein müssen, besser sogar mindestens fünf Körner, ohne weiteres erreicht werden. Somit können heliumdichte Membranen realisiert werden, welche für die Messzellenanforderung notwendig sind. Die Membran ist nun bereit für die Weiterverwendung im Messzellenaufbau.

Die Membran sowie eine plane Oberfläche des ersten Gehäusekörpers aus Al₂O₃ wird nun mit einem elektrisch leitenden Belag für die Ausbildung der Elektroden versehen. Dazu kann beispielsweise eine metallhaltige, beispielsweise eine goldhaltige Farbe verwendet werden, die beispielsweise aufgepinselt, aufgesprayt oder vorzugsweise aufgedruckt wird. Eine weitere Methode besteht darin, die elektrisch leitende Schicht mit Vakuumaufdampfen zu erzeugen, vorzugsweise mit Sputtern. Um die Schicht präzise und definiert erstellen zu können, ist es von Vorteil, wenn beispielsweise eine Goldschicht, die zuerst relativ dick, etwa 1µm, aufgebracht wird, anschliessend im inneren Bereich wieder abgedünnt wird, bis auf einige Nanometer Dicke, etwa 5 nm, mit einem Ätzverfahren, wie vorzugsweise einem lonen- bzw. Sputterätzen. Auf diese Art entsteht ein dickerer Randbereich welcher, wenn beispielsweise gelötet wird, Diffusionsverluste kompensiert. Ein praktisch einfach anwendbares und bevorzugtes Verfahren besteht darin, dass zuerst eine dünne Schicht von einigen nm über die ganze Fläche aufgebracht wird und danach am Rand eine dickere Schicht Gold mit Siebdruck (d.h. mit Kombinationsverfahren und verschiedenen Schichtdicken). Solchermassen behandelte Membranen, bzw. Gehäuse werden anschliessend getempert mit Temperaturen von einigen 100°C, vorzugsweise im Bereich von 650°C. Besonders vorteilhaft können Temperaturen bis 850°C verwendet werden bei entsprechender Wahl der zu verwendenden Materialien.

Das zweite Keramikgehäuse, welches messseitig angeordnet wird, besteht aus einer planen Keramikplatte, welche membranseitig eine flächige Ausnehmung aufweisen kann, um einen genügend grossen Messvakuumraum zu bilden. Der Anschlusstutzen wird an diesem Keramikgehäuse durch Schweissen, Kleben oder Löten, vorzugsweise mit einem Glaslot, so verbunden, dass die Anschlussöffnung mit dem zukünftigen Messvakuumraum kommunizieren kann.

Die Membrane wird im peripheren Bereich, wo die Dichtung erfolgt, beidseitig mit einer Glaspaste versehen, vorzugsweise mit einem Siebdruckverfahren. Nach dem Trocknen wird die Membrane mit der Glaspaste in einem Ofen bei einigen 100°C, vorzugsweise bei etwa 670°C, eingebrannt. Danach wird die Glasoberfläche beidseitig poliert, wobei vorzugsweise auch der zukünftige Elektrodenabstand definiert wird.

Das elektrodenseitige, obere Keramikgehäuse kann zusätzlich auf der Aussenseite mit Hilfe des bereits erwähnten Beschichtungsprozesses, mit einer elektrisch leitenden Schicht versehen werden, um eine Abschirmung zu bilden. Ausserdem werden auch hier die Anschlussstellen am Gehäuse angebracht. In einem weiteren Schritt werden die Bohrungen für die elektrische Durchführung für die Elektrodenanschlüsse metallisiert, vorzugsweise mit Silber.

In einer Testphase wird das erste Gehäuse mit der Elektrode und den Durchführungen, zusammen mit der aufgelegten Membran, auf Dichtigkeit und auf die Elektrodendistanz geprüft. Danach wird der untere Gehäuseteil aufgelegt und der ganze Aufbau gewichtsbelastet, um ebenfalls die Funktion und die Distanzen zu testen. Anschliessend erfolgt in einem Montagerahmen allenfalls zusätzlich das Aufsetzen des Getteranschlusses und unter Gewichtsbelastung von etwa 200 Gramm ein Einbrennen der Glasdichtungen bei einigen 100°C, vorzugsweise bei etwa 630°C, und anschliessend ein Test, ob die erforderlichen Abstände eingehalten werden. Allenfalls kann durch weitere Gewichtsbelastung oder - entlastung und einen weiteren Brennvorgang der Membranabstand korrigiert werden. Der Vorgang des Dichtens muss sehr sorgfältig erfolgen und wie bereits erwähnt sollten bei der Messzellenanordnung keine Spannungen auftreten. Alternativ kann anstelle von Glaslot oder anderen Abdichtungsmitteln auch eine direkte Verschweissung erfolgen, vorzugsweise eine Laserverschweissung.

Diese bekannte Messzellenanordnung wird nun anhand von Figuren schematisch und beispielsweise beschrieben.

Eine derartige kapazitive Messzelle aus Al₂O₃ mit im Wesentlichen vollständig um die Membran symmetrisch angeordnetem Aufbau ist im Querschnitt in Fig. 1 dargestellt. Das erste Gehäuse 1 besteht aus einer Keramikplatte aus Al₂O₃ welches in einem Abstand von 2µm bis 50µm gegenüber der keramischen Membran 2 im Randbereich dichtend verbunden ist und einen Referenzvakuumraum 25 einschliesst. Der Abstand zwischen den beiden Flächen wird in der Regel direkt beim Montieren über das Dichtungsmaterial 3, welches zwischen dem Membranrand und dem Gehäuserand liegt, eingestellt. Auf diese Weise kann eine vollständig plane Gehäuseplatte 1 verwendet werden. Auf die gleiche Art und Weise wird in einem zweiten Gehäuse 4 auf der gegenüberliegenden Membranseite ein Messvakuumraum 26 ausgebildet, welcher über einen Anschluss-Stutzen 5 durch eine Öffnung im Gehäuse 4 für zu messende Medien erreichbar ist.

In Fig. 2 ist ein vergrösserter Ausschnitt des Randbereiches einer Messzelle im Querschnitt dargestellt. Die Dichtung 3 beidseitig der Membran 2 definiert wie erwähnt den Abstand der beiden Gehäuse 1 und 4. Diese Dichtung ist beispielsweise und bevorzugt ein Glaslot, welches einfach handhabbar ist und beispielsweise durch Siebdruck aufgebracht werden kann. In einer typischen Messzelle mit einem Aussendurchmesser von 38 mm und einem freien Membran-Innendurchmesser von 30 mm beträgt der Abstand 3 etwa 2 bis 50µm, vorzugsweise 12 bis 35µm. Hierbei ist beispielsweise das erste Gehäuse 1 5 mm dick, das zweite Gehäuse 4 3 mm dick. Das zweite Gehäuse 4 wird vorzugsweise im Innenbereich, wie in Figur 1 dargestellt, mit einer ca. 0,5 mm tiefen Ausnehmung versehen, um den Messvakuumraum 26 zu vergrössern. Die Membran 2 und das Gehäuse 1 sind referenzvakuumraumseitig mit je einer elektrisch leitenden Schicht 7 beschichtet. Die beiden Schichten stehen miteinander elektrisch nicht in Verbindung. Die Schichten 7 können beispielsweise aufgemalt, aufgedruckt, aufgesprayt oder mit einem Vakuumverfahren aufgebracht werden. Vorzugsweise werden sie mit einem Vakuumverfahren, wie mit Bedampfen oder Sputtern aufgebracht. Besonders geeignet als Schichtmaterial ist Gold, welches beispielsweise mit 1µm Schichtdicke aufgedampft wird und hernach mittels Sputter Ätzen auf einige Nanometer, beispielsweise 5 nm abgedünnt wird. Die Schicht kann dadurch in der Dicke definiert und dünn genug, spannungsfrei eingestellt werden. Die elektrischen Anschlüsse 7 der Membrane erfolgen vorzugsweise mit vakuumdichten, elektrisch leitenden Durchführungen 6, vorzugsweise durch das Gehäuse 1, wo sie dann mit der Auswertelektronik verbunden werden können.

Der Ausgleichskanal, welcher durch den ersten Gehäusekörper 1 führt, und die GetterAnordnung werden in Fig. 2 nicht gezeigt.

Um ein langzeitstabiles Referenzvakuum im Raum 25 aufrecht erhalten zu können, wird, wie in Fig. 4 dargestellt, ein Getter 10 vorgesehen. Dieser Getter ist vorzugsweise ein nicht verdampfbarer Getter, um den Referenzvakuumraum 25 von verdampfenden Partikeln freizuhalten. Am Gehäuse 1 ist ein Getterraum 13 zur Aufnahme des Getters 10 vorgesehen, welcher über eine Verbindung 14 bzw. Abpumpleitung mit dem Referenzvakuumraum 25 in Verbindung steht. Der Getterraum 13 kann auch auf dem Gehäuse 1 aufgesetzt werden, wird aber mit Vorteil ins Gehäuse 1 eingelassen. Beim Abpumpen des Referenzvakuumraumes 25 über die Abpumpleitung 14 ist der Getterraum 13, indem der Deckel 8 mit dem Getter 10 beabstandet ist und eine Öffnung freigibt, mit der Abpumpvorrichtung verbunden. Der Deckel 8 aus Metall oder aber auch aus Keramik wird während dem Abpumpen aufgeheizt, so dass der Getter aktiviert wird und gleichzeitig entgast wird. Nach Aktivieren des Getters wird während dem Abpumpen der Deckel 8 mit dem Dichtmaterial 9 zwischen Dekkel 8 und Gehäuse 1 dichtend ans Gehäuse 1 gepresst. Das Dichtmaterial 9 kann beispielsweise ein Glaslot sein. Die Haltefeder 11, welche den Getter gegen den Deckel 8 drückt, sorgt dafür, dass der Getter 10 gegenüber dem Deckel 8 thermisch gut kontaktiert wird.

Eine weitere Variante einer Getteranordnung ist in Fig. 4 dargestellt, wo zur besseren thermischen Kontaktierung des Getters 10 gegenüber dem Deckel 8 ein Kontaktiermittel 12, vorzugsweise ein Lot, zwischen Getter 10 und Deckel 8 angebracht wird. Ein guter Wärmeübergang ist hier notwendig, um den Getter 10 über den Deckel 8 thermisch von aussen aktivieren zu können. Die vorliegende Getteranordnung erlaubt ausserdem das Aktivieren des Getters und anschliessende Verschweissen des Deckels 8 in einem Arbeitsgang, wenn dafür gesorgt wird, dass die Aktivierungs-Temperatur des Getters 10 und die Verschweiss-Temperatur des Lotes 9 im Wesentlichen übereinstimmen.

Eine Messzelle basierend auf vorgängig beschriebenem Konzept, die als Produkt realisiert wurde und bereits in hohen Stückzahlen verkauft wurde, ist in der folgenden Fig. 5 beispielhaft dargestellt.

Dennoch treten in praktischen Anwendungen immer noch verschiedene Probleme im Zusammenhang mit der Druckmessung im Vakuum mit Hilfe von kapazitiven Membran-Vakuummesszellen auf.

In der Halbleiter- und Beschichtungsindustrie ist der Sensor heissen und ätzenden Gasen ausgesetzt. Einige dieser Prozessgase und oft die Produkte von den Prozessen neigen zum Kondensieren auf kälteren Oberflächen. Um dieses Kondensieren zu vermeiden oder zu reduzieren, werden die Membranmesszellen geheizt, so dass die dem Prozess ausgesetzte Membran eine höhere Temperatur hat als das Prozessgas, so dass die Gase vorzugsweise an einem anderen Ort im System kondensieren aber nicht auf der empfindlichen Membrane. Dies wird deshalb gemacht weil das Aufwachsen von dünnen Schichten auf der Membrane zu Spannungen führt in der Schicht auf der Membrane, wobei dies zu Druckspannungen oder Zugspannungen führt auf der Membrane und dies folglich ein Driften des Sensors erzeugt. Manchmal wird deshalb das ganze Prozesssystem geheizt, so dass kaum Kondensationen irgend welcher Art entstehen können.

Die kapazitive Messtechnik ist eine sehr empfindliche und eine Messtechnik mit Langzeitstabilität, sie ist aber auch sehr empfindlich gegenüber elektromagnetischen Interferenzen (EMI). Daher wird die Front - End - Elektronik, wie Vorverstärker oder Kapazität zu Frequenz Konverter, vorzugsweise sehr nahe beim kapazitiven Element platziert.

Prozess- und Umgebungstemperaturen von 300°C und höher sind anspruchsvolle Anforderung für elektrisches Systeme jeder Art. Üblicherweise muss die Elektronik für eine Umgebungstemperatur von bis zu 80°C spezifiziert werden oder in speziellen Fällen, wie militärischen, bis zu 120°C.

Für Temperaturen bis 200°C ist der Einsatz von CDG Sensoren vom remote Typ üblich (die Elektronik wird über ein Kabel vom geheizten Sensor getrennt). Derartige Lösungen leiden unter den Problemen der kapazitiven Messmethode bezüglich dem Temperaturgradient, da die Anschlusskabel auch Teil der empfindlichen kapazitiven Messzone darstellen, welche sich ausbildet zwischen dem Sensorkopf und der Elektronik und diese zusätzlich unter der erhöhten Anfälligkeit von EMI (Elektro Magnetische Interferenz) leiden. In der Praxis verschlechtern beide Effekte die Qualität einer CDG auf unerwünschte Weise.

Es ist Aufgabe der vorliegenden Erfindung die Nachteile des vorerwähnten Standes der Technik zu beseitigen. Ausserdem soll die Anordnung wirtschaftlich herstellbar sein.

Die Aufgabe wird erfindungsgemäss durch die Anordnung nach Anspruch 1 gelöst, sowie nach dem Verfahren zur Herstellung einer Vakuummesszelle nach Anspruch 21. Die Abhängigen Ansprüche definieren weitere vorteilhafte Ausführungsformen.

Die Ausbildung einer Optischen Membran Messzelle (ODG) eliminiert die vorerwähnten bedeutenden Nachteile der CDG Messzellenanordnung. Die druckabhängige Auslenkung der Membrane wird hierbei im Sensor mit Hilfe eines optischen Systems gemessen wobei das gemessene Signal mit einer optischen Faser transportiert wird zur optischen Signalaufbereitungseinheit, welche in der Folge das optische Signal in ein elektrisches Signal umwandelt.

Dieses optische Signal kann über grosse Distanzen (sogar Kilometer) transportiert werden ohne Abschwächung und ohne Verfälschungen durch umgebende Störungen, wie hauptsächlich elektromagnetische Störungen, Vibrationen und Veränderungen der Umgebungstemperatur.

In der Literatur wurden optische Membranmesszellen beschrieben in (e.g. Lopez-Higuera, 2002; Totsu et al., 2003). Vom Grundprinzip her ist hier eine derartige Membranmesszelle beschrieben. Die Auslesung der Zelle erfolgt optisch. Es sind viele optische Messmethoden bekannt zur Messung der Distanz von zwei Teilen. Wenn aber in der Druckmessung tatsächlich Distanzen im Bereich von einigen 10 Angström (10⁻¹⁰m) gemessen werden müssen, dann kommt hauptsächlich das Fabry - Perot Messprinzip in Frage. Wichtige Anwendungen sind hierbei die Betriebsüberwachung von chemischen Prozessen und biomedizinische Anwendungen. Derartige bekannte Sensoren arbeiten bei typischen Drucken über Atmosphäre.

Optische Methoden zur Messung von Membranauslenkungen bei Temperaturen über 550°C wurden in einigen kommerziellen Produkten realisiert wie beim "Luna Innovations Fiber Optic Pressure Sensor" wobei Fabry - Perot Interferometrie verwendet wurde. Sensoren der Firma Taitech, die FISO Technologie von Davidson Instruments benutzt die Silizium - Technik MEMS.

Hierbei wird Licht von einer Lampe in eine Glasfaser geleitet. Das Licht wird zum Sensorkopf geführt und tritt durch einen halbdurchlässigen Spiegel hindurch und trifft auf einen reflektierenden Spiegel auf der Membrane. Das reflektierte Licht passiert wiederum den teilreflektierenden Spiegel, wobei der reflektierende Spiegel auf die Glasfaser fokussiert ist welche zum Interferometer führt.

Die erfindungsgemässe ODG - Sensoranordnung basiert vom Grundaufbau her auf dem zuvor beschriebenen CDG - Sensor welcher aus Aluminiumoxid besteht. Grundsätzlich ist dieses Aluminiumoxid Sensorkonzept eine Weiterentwicklung, um auch hier die Membranauslenkung optisch auslesen zu können. Es wurde erkannt, dass die Kombination des Aluminiumoxid Sensorkonzeptes mit dem optischen Ausleseprinzip basierend auf der Fabry - Perot Technologie zu herausragend guten Resultaten führt.

Die Erfindung wird nun beispielsweise anhand von schematischen Figuren näher erläutert. Es zeigen:
- Fig. 1a: Ein Diagramm welches die typischen Druckbereiche für Prozesse zeigt, wie sie in der Halbleiterindustrie verwendet werden;
- Fig. 1: Im Querschnitt eine kapazitive Vakuummesszelle gemäss dem Stand der Technik;
- Fig. 2: Eine vergrösserte Darstellung im Querschnitt gemäss Figur1;
- Fig. 3: Im Querschnitt eine Getteranordnung gemäss dem Stand der Technik;
- Fig. 4: Eine weitere Getteranordnung gemäss dem Stand der Technik;
- Fig.. 5: Im Querschnitt eine kapazitive Vakuummesszelle zusammen mit einer Getteranordnung gemäss dem Stand der Technik;
- Fig. 6a, 6b: Im Querschnitt eine Darstellung der Membranauslenkung unter Druckbeanspruchung bei einer CDG - Messzelle;
- Fig. 7: Schematisch ein interferometrisches Druckmessystem gemäss der Erfindung;
- Fig. 8: Im Querschnitt eine optische Membranmesszelle zur Definition der Winkelgenauigkeit der Membrane, Gehäusekörper und des Fensters gemäss der Erfindung;
- Fig. 9: Im Querschnitt ein bevorzugtes Spiegelschichtsystem gemäss der Erfindung;
- Fig. 10: Im Querschnitt eine optische Membranmesszellenanordnung mit Membranspiegel und beabstandeter Doppelglasfaseranordnung bei grossem Fokussierungsabstand;
- Fig. 11: Im Querschnitt eine Eintauchsensoranordnung mit Mehrfachsensoren auf einem einzelnen Träger.

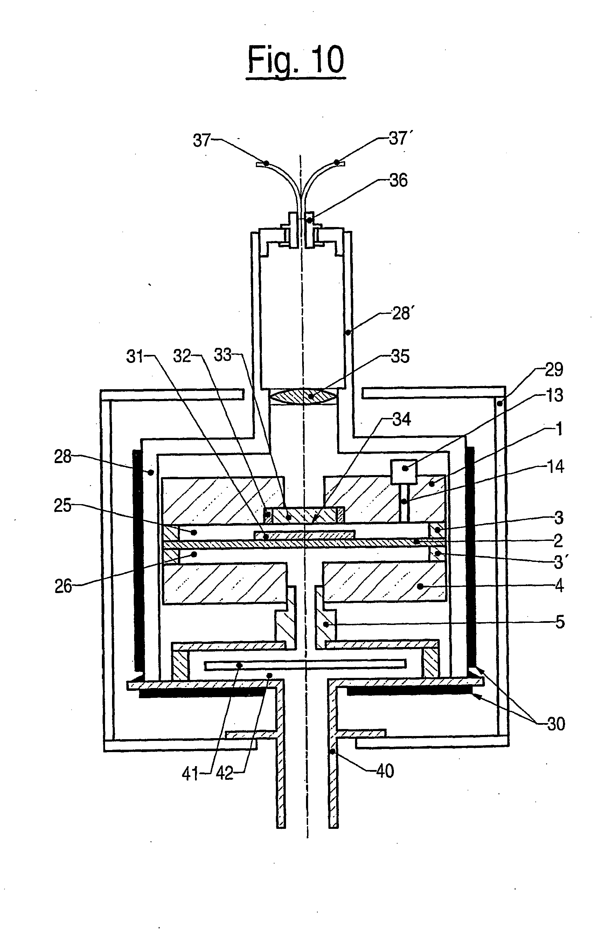

Eine erfindungsgemässe kapazitive Messzelle aus Al₂O₃ mit im Wesentlichen vollständig um die Membran symmetrisch angeordnetem Aufbau ist im Querschnitt in Fig. 10 dargestellt. Das erste Gehäuse 1 besteht aus einer Keramikplatte aus Al₂O₃ welches in einem Abstand von 2µm bis 50µm gegenüber der keramischen Membran 2 im Randbereich dichtend verbunden ist und einen Referenzvakuumraum 25 einschliesst. Der Abstand zwischen den beiden Flächen wird in der Regel direkt beim Montieren über das Dichtungsmaterial 3, 3', welches zwischen dem Membranrand und dem Gehäuserand liegt, eingestellt. Auf diese Weise kann eine vollständig plane Gehäuseplatte 1 verwendet werden. Auf die gleiche Art und Weise wird in einem zweiten Gehäuse 4 auf der gegenüberliegenden Membranseite ein Messvakuumraum 26 ausgebildet, welcher über einen Anschluss-Stutzen 5 durch eine Öffnung im Gehäuse 4 für zu messende Medien erreichbar ist.

Die Dichtung 3, 3' auf beiden Seiten der Membran 2 definiert wie oben beschrieben den Abstand der beiden Gehäuse 1 und 4. Diese Dichtung ist beispielsweise und bevorzugt ein Glaslot, welches einfach handhabbar ist und beispielsweise durch Siebdruck aufgebracht werden kann. Die Schmelz- oder Sintertemperatur dieser Glaspaste liegt vorzugsweise im Bereich von 675°C bis 715°C. Die Einschmelztemperatur liegt vorzugsweise im Bereich von 600°C bis 630°C.

In einer typischen Messzelle mit einem Aussendurchmesser von 38 (5-50) mm und einem freien Membran-Innendurchmesser von 30 (4-45) mm beträgt der Abstand 3 etwa 2 bis 50µm, vorzugsweise 12 bis 35µm. Hierbei ist beispielsweise das erste Gehäuse 1, 2 bis 10 mm dick, wie auch das zweite Gehäuse 4. Das erste Gehäuse 1 und das zweite Gehäuse 2 müssen aus Materialien mit ähnlichem Ausdehnungskoeffizienten wie demjenigen des Materials der Membran hergestellt sein. Sehr geeignete Kombinationen bestehen aus hoch reinem Aluminiumoxid Keramik (Reinheit >96%, vorzugsweise >99,5%), Sapphal Keramik (Aluminiumoxid mit einer Reinheit über 99,9%) und Saphir (Einkristallines hoch reines Aluminiumoxid, Kunst Korund).

Das zweite Gehäuse 4 wird vorzugsweise im Innenbereich, wie in Fig. 1 dargestellt, mit einer ca. 0,5 mm tiefen Ausnehmung versehen, um den Messvakuumraum 26 zu vergrössem.

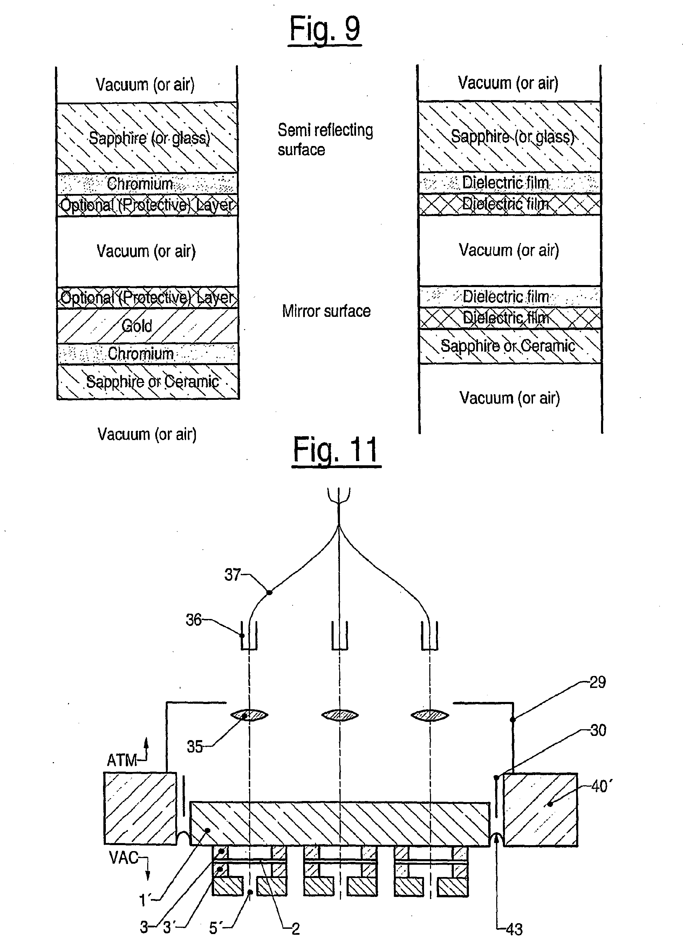

Die Membran 2 ist referenzvakuumraumseitig mit einer elektrisch leitenden Schicht beschichtet, die eine Spiegelschicht 31 bildet. Es gibt zwei Möglichkeiten für die Beschichtung der Membrane und des Fensters oder des ersten Gehäuses, um ein Fabry-Perot Interferometer zu bilden. Die grundlegenden Ideen der Beschichtungen, die im Fabry-Perot benutzt werden können, wurden gut beschrieben in der Literatur (siehe Vaughan JM, The Fabry-Perot Interferometer, Adam Hilger Bristol and Philadelphia, 2002). In Figur 9 werden beide grundsätzlichen Möglichkeiten schematisch dargestellt. Entweder wird ein vollständig metallisches oder ein dielektrisches System gewählt. Die metallischen Beschichtungen können durch dielektrische Schichten geschützt werden für einfachere weitere Prozesse.

Der metallische Spiegel ist vorzugsweise als vollreflektierende Schicht ausgeführt. Diese Schichten 31 können beispielsweise aufgemalt, aufgedruckt, aufgesprayt oder mit einem Vakuumverfahren aufgebracht werden. Vorzugsweise besteht diese Schicht hauptsächlich aus Gold und wird aufgetragen durch aufdrucken und die Dicke liegt in einem Bereich von 0.3 bis 10 µm. Die Abpumpleitung 14 führt durch den ersten Gehäusekörper 1 und verbindet den Referenzvakuumraum 25 mit der Getterkammer 13, wo eine Getteranordnung mit einem Getter 10 angeordnet ist, welches in Figur 10 nicht gezeigt wird. Diese Getteranordnung ist identisch mit der Getteranordnung der bereits beschriebenen CDG Messzelle mit den dazugehörigen Figuren 3 und 4.

Das erste Gehäuse 1 kann vollständig aus optisch transparentem Material hergestellt werden oder beinhaltet in der Mitte einen transparenten Bereich, der ein eingesetztes optisches Fenster 33 bildet. Ein optisches System ist unmittelbar hinter oder in Distanz hinter dem transparenten Gehäuse 1 oder dem Fenster 33 angeordnet, um an das Fabry - Perot Interferometer und die reflektierende Oberfläche der Membrane 2 anzukoppeln, zur Messung der Membranauslenkung welche abhängig ist vom zu messenden Druck. Das Licht und das optische Signal wird mit mindestens einer Glasfaser 37, 37' vom Interferometer zur Messzelle geführt. Es ist vorteilhaft wenn die innere Oberfläche 34 innerhalb des Referenzvakuumraumes gegenüber des Spiegels 31 der Membrane 2 des transparenten Gehäuse 1 oder des Fensters 33 beschichtet ist mit einer Teiltransparenten Schicht, vorzugsweise mit einer Halbtransparenten Schicht. Diese Beschichtung muss der Ausbacktemperatur von einigen 100 °C widerstehen können während dem die Messzelle montiert und zusammengebacken wird, wie dies zuvor beschrieben worden ist für die CDG Montageprozedur. Es ist sehr von Vorteil wenn Saphir für das transparente Gehäuse 1 oder das Fenster 33 verwendet wird wegen den optischen Eigenschaften und der Präzision, die erreicht werden kann. Allerdings ist dieses Material teuer und die Verwendung eines Fenstereinsatzes 33 ist billiger und zusätzlich kann der Winkel eingestellt und optimiert werden zur Erzielung einer guten Signalqualität des Messsystems. Wenn ein Fenstereinsatz 33 verwendet wird muss dieser auf die gleiche Art und Weise mit einer Dichtung 32 eingesetzt werden, wie dies bereits zuvor beschrieben wurde zur Abdichtung der Membrane 2 mit den Dichtungen 3, 3'. Das Dichtungsmaterial besteht vorzugsweise aus einer gebackenen Glaspaste durch Aufheizen der Paste auf einige hundert Grad Celsius.

Die bevorzugte Messzellenanordnung, wie sie dargestellt ist in Figur 10 ist von einer Halterung 28 und einer Heizung 30 umgeben. Mit dieser Heizung 30 kann die Messzelle über die Kondensationstemperatur bezüglich der involvierten Substanzen des zu messenden Vakuumprozesses aufgeheizt werden. Die Temperatur der Zelle liegt hierbei vorzugsweise mindestens 10°C über der Kondensationstemperatur. Vorteilhafte praktische Temperaturwerte liegen im Bereich von 100° bis 600°C. Derartige chemische Substanzen sind oft sehr agressiv und das Heizen ist eine effektive Massnahme diese fern zu halten von empfindlichen Teilen der Messzelle. Durch diese Massnahme ist sichergestellt, dass die Messzelle mit hoher Genauigkeit und hoher Reproduzierbarkeit über lange Zeit der ausgeführten Prozesse zuverlässig arbeitet.

Bei einer derartigen geheizten Messzelle ist es wichtig darauf zu achten, dass die Glasfaser nicht zu hohe Temperaturen erreicht oder gar zerstört wird und dass die optische Messgenauigkeit des Systems nicht negativ beeinflusst wird. Wie in Figur 10 dargestellt ist, kann diese Problem dadurch gelöst werden, dass die Faser 37, 37' mit ihren Anschlüssen in genügender Distanz von der heissen Messzelle angeordnet ist, derart dass die Temperatur an der Faser unter 100°C liegt. Beispielsweise kann die Faser einige cm entfernt von der Zelle angeordnet werden und durch eine Halterung 28', wie einem Röhrchen aus rostfreiem Stahl, gehalten werden, um die Temperatur zu reduzieren. In diesem Fall wird zwischen der Faser und dem Gehäuse 1 oder dem Fenster 33 eine Linse 35 angeordnet, um optimales ankoppeln des optischen Signals an die Membrane zu gewährleisten.

Die ganze Messzellenanordnung kann geschützt werden mit einer dies umgebenden Abdeckung 29. Es ist auch vorteilhaft den Messanschluss 5 mit dem Messvakuumraum 26 und der Membrane 2 der Zelle nicht direkt gegenüber der Prozesskammer zu exponieren wo agressive Bedingungen herrschen, wie Plasmaentladungen, chemische Stoffe etc. In diesem Fall wird der Anschluss 5 über einen Flansch 40 mit der Prozesskammer verbunden welcher einen Hohlraum 42 aufweist der ein Baffle (Abschirmung) enthält in Form einer Schutzplatte 41.

### Membrane:

Ein Teil der Membrane auf der Referenzvakuumseite ist an der Oberfläche für Licht optisch reflektierend ausgebildet. Dazu werden verschiedene vorteilhafte Verfahren angegeben: Eine vorteilhafte Methode ist, ein dünnes reflektierendes Plättchen 31 an der Aluminiumoxid Membrane zu befestigen. Eine andere vorteilhafte Methode ist einen Spiegel 31 aus Gold auf eine Saphir Membran aufzudampfen. Zwischen dem Saphir und dem Gold wird eine Chromschicht angeordnet, um die Haftung des Gold auf Saphir zu erhöhen. Eine weitere Methode ist das aufmahlen , das aufdrucken oder das aufsprayen.Es können auch dielektrische Beschichtungen anstelle von metallischen Schichten aufgebracht werden oder auch zusätzlich auf die Metallschicht.

### Saphir Membran:

Vorzugsweise besteht die Membran 2 aus Saphir. Saphir ist hierbei definiert als ein einkristallines Aluminiumoxid (Al2O3; künstlich erzeugtes Korund) mit definierter Kristallorientierung. Viele der Physikalischen Eigenschaften hängen von dieser Orientierung ab.

Die Materialwahl des Saphir weist viele Vorteile auf:
- Hohe Korrosionsbeständigkeit gegenüber Prozessgasen welche in der Halbleiterindustrie eingesetzt werden, wie beispielsweise Fluoride (NF₃, CH₂F₂, SF₆, CF₄, CHF₃) oder Chloride (z.B.. Cl₂, HCl), oder Bromide (z.B. HBr) Gase oder Wasserdampf.
- Da Saphir monokristallin ist, ist die Oberfläche feiner als bei polykristallinem Aluminiumoxidkeramik.
- Zusätzlich reduziert die feine monokristalline Oberfläche die Anzahl der Keimbildungsstellen auf der Oberfläche. Dies führt zu reduzierter Schichtabscheidung auf der Prozessseite der Membrane 2 und somit zu weniger Sensordrift weil dadurch der Aufbau von Spannungen durch die Beschichtung langsamer erfolgt.
- Saphir lässt eine grössere Durchbiegung zu. Dadurch können grössere Auslenkungen der Membrane 2 erlaubt werden , was den Messbereich der Messzelle erweitert und wodurch in sehr tiefen Druckbereichen eine höhere Genauigkeit erzielt wird.

In der folgenden Tabelle werden gemessene Werte angegeben im Vergleich mit Aluminiumoxid:

| Thickness | Deflection | Thickness | Deflection |
|---|---|---|---|
| Al2O3 | Al2O3 | Sapphire | Sapphire |
| [µm] | [µm] | [µm] | [µm] |
| 765 | 5,73 | 706 | 6,46 |
| 150,4 | 264* | 151,6 | 240 |
| 55 | 293* | 44,6 | 413 |

Es ist ersichtlich, dass mit einer Saphirmembran mit einer Dicke unter 150µm eine grössere Auslenkung, bis zum zweifachen, erreicht werden kann als mit Al₂O₃. Bei den letzten zwei Beispielen (*) ist mit Al₂O₃ die Membrane bei der Auslenkung gebrochen, da die Grenze der Flexibilität erreicht worden ist.

Die Membrane 2 wird aus dem Saphir Kristall herausgeschnitten, derart dass die Membrane vorzugsweise rechtwinklig zur C - Achse (Strukturindex 0001) liegt. Diese Orientierung ergibt den grösseren Temperaturausdehnungskoeffizienten rechtwinklig zur Membrane anstatt zur Membrane selbst. Diese Auswahl der Achsenorientierung führt zu erhöhter thermischer Ausdehnung in vertikaler Auslenkung und zu grösserer Sensordrift in Funktion der Temperatur, welche besser kompensierbar ist. Diese Wahl ermöglicht somit die Reduktion von unerwünschter Beulenbildung der dünnen Membrane.

Die Saphirmembrane 2 weist einen Durchmesser im Bereich von 5 bis 80 mm auf, vorzugsweise im Bereich von 5 bis 40 mm und ist 0.04 bis 0.76 mm dick, vorzugsweise 0.07 bis 1.0. mm, um Probleme mit Beulen zu vermeiden. Die obere und die untere Ebene sollten eine Parallelität aufweisen von 0.005 mm oder besser und eine Oberflächenrauhigkeit von N4 bzw. Ra 0.35 oder besser im Bereich des Spiegels 31.

### Voll reflektierender Spiegel:

Der Spiegel 31 auf der Referenzvakuumseite der Membrane 2 besteht aus einem Edelmetall, vorzugsweise aus Gold. Eine Chromschicht wird verwendet, um die Haftung des Gold auf dem Saphir zu erhöhen. Die Sintertemperatur für die Edelmetallbeschichtung, wie für Gold oder Silber, beträgt bis zu 850°C.

Eine einzelne Chromschicht kann im Einzelfall auch genügend sein, die Reflektivität ist dann aber reduziert. Eine Alternative besteht darin Einzelschichten oder Mehrfachschichten aus dielektrischem Material zu verwenden.

### Erster Gehäusekörper:

Der erste Gehäusekörper 1 kann aus Aluminiumoxid Keramik oder aus Saphir hergestellt sein. Saphir ist bevorzugt wegen dem geeigneteren thermischen Ausdehnungskoeffizienten des Trägers mit der Membrane. Wegen Kostenargumenten kann auch Aluminiumoxid für den ersten Gehäusekörper verwendet werden. In den Gehäusekörper kann dann eine Öffnung gebohrt werden in welche ein teilreflektierender Spiegel montiert wird und Halteelemente für die optische Faser angebracht sind.

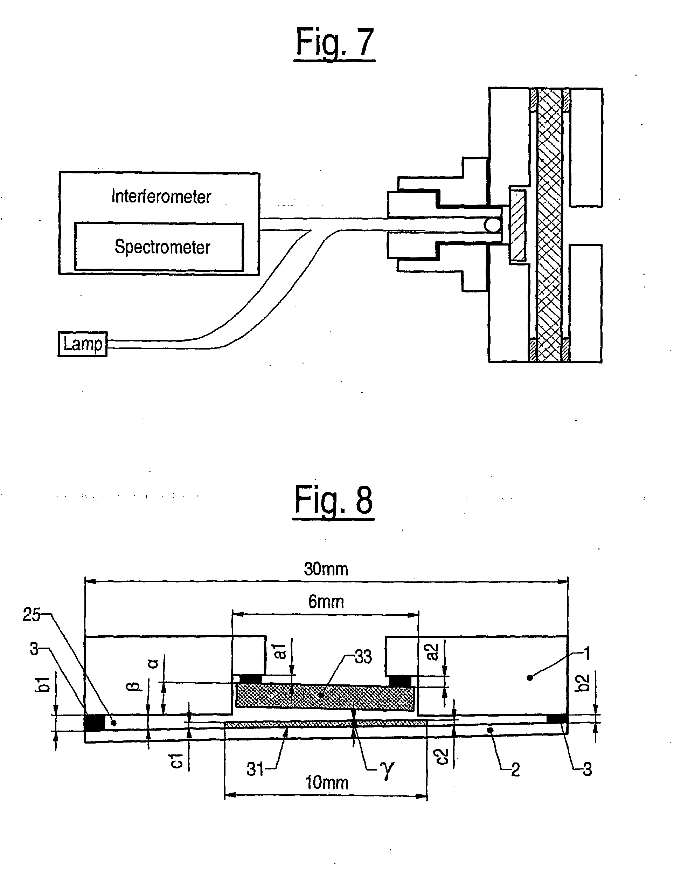

### Teildurchlässiger Spiegel (Fig. 8, Fig.9 and Fig.10):

Die Wahl des Teiltransparenten Spiegelmateriales an der inneren Oberfläche 34 des Fensters 33 ist besonders schwierig. Während dem Herstellprozess der Zelle werden Sinter- und Bondingtemperaturen bis zu 700°C erreicht. Dies stellt ein besonderes Problem dar, um zu verhindern, dass Spiegelmaterial wegdiffundiert oder sublimiert.

Der teilreflektierende Spiegel wird erzeugt durch aufdampfen von Chrom auf eine klare Saphir Fensteroberfläche 34. Die Chromschicht hat beispielsweise eine Dicke von etwa 5nm. Um den Schutz der Chromschicht zu verbessern gegen Oxidation kann optional eine Schutzschicht aus Tantalpentoxid (Ta₂O₅) auf die Oberfläche der Chromschicht aufgebracht werden. Das Saphirfenster wird montiert mit einbacken von Glaslot in den Gehäusekörper auf die gleiche Art wie zuvor beschrieben für das montieren der Membrane.

### Parallelität der ODG Kavität:

Um gute Empfindlichkeit zu erreichen, muss der Spiegel 31 auf der Membrane 2 und der teildurchlässige Spiegel 34 im Gehäusekörper 1 präzise parallel ausgerichtet sein. Die maximale zulässige Verkippung der Winkel |α+β+γ| beträgt 0.05 mrad entsprechend der Darstellung in Figur 8.

### Baffle:

Vorzugsweise wird ein Baffle 41 vor dem Sensorkopf angeordnet, wie dies in Figur 10 dargestellt ist. Dies dient mindestens zwei Aufgaben. Es stellt sicher, dass keine direkte Sichtverbindung auf die empfindliche Membrane 2 besteht. Gasteilchen müssen deshalb mindestens zweimal an andere Teile der Messzelle treffen bevor sie die Membrane 2 erreichen können. Leicht kondensierbare Gasteilchen schlagen sich vorzugsweise an der Baffleoberfläche nieder bevor sie an der Membranoberfläche kondensieren können. Das reduziert die Sensordrift zusätzlich und erweitert die Lebensdauer des Sensors. Das Baffle dient auch der Umwandlung von Plasma in Gas von geringer Ladungsintensität, vorzugsweise zu neutralem Zustand wegen den erzwungenen Wandberührungen.

### Eintauch Sensor:

Das ODG Sensor-Konzept kann auch als Eintauchanordnung eingesetzt werden. Dies ist eine weitere bevorzugte Ausbildung, wie dies in Figur 11 dargestellt ist.

Bei dieser Anordnung ist die Sensorzelle nicht in ein Rohr zurückgezogen von der Hauptvakuumkammer. Der Sensorkopf kann direkt auf einem Flansch 40, 40' angeordnet werden. Hierbei wird dann der Sensor direkt in das Vakuum der Vakuumkammer eingetaucht. Die Membrane und das Sensorgehäuse bestehen aus korrosionsfestem Material.

### Multiplex Sensorkopf:

Die optische Signalauslesung erlaubt die Verwendung eines Mehrfachsensorkopfes, wobei das Signalauslesen mit einem einzelnen Spektrometer möglich ist. Dies kann realisiert werden entweder durch die Verwendung von mehreren separaten Fasern welche parallel angeordnet sind beim Eingang des Spektrometers oder es können gegabelte Fasern oder Fiberschalter verwendet werden. Die Sensorköpfe können an verschiedenen Orten im System oder der Anlage angeordnet werden.

Noch wesentlich interessanter ist die Möglichkeit mehrere Sensoren direkt nebeneinander anzuordnen auf demselben Flansch 40, 40'. Dies ist schematisch in Figur 11 dargestellt als Eintauchsensor mit Mehfachköpfen. Die Köpfe können von derselben Art sein, um Redundanz zu erzielen oder sie können verschiedener Art sein, um verschieden überlappende oder benachbarte Druckbereiche messen zu können. Dies ermöglicht einen breiten Messbereich abdecken zu können unter Verwendung von nur einem Flanschanschluss an der Kammer.

Bisherige kapazitive Membranmanometer hatten einen dynamischen Bereich von 4 Dekaden. Das bedeutet beispielsweise, um die Abdeckung eines Bereiches wie von 10⁻⁵ mbar bis Atmosphäre realisieren zu können mussten mindestens zwei verschiedene Messröhren eingesetzt werden, wobei jede davon einen eigenen separaten Vakuumkammeranschluss benötigte. Wenn hingegen mehrere Sensoren auf einem einzelnen Flansch 40, 40' mit den Haltemitteln 43 angeordnet sind, kann jeder Sensor für einen anderen Druckbereich vorgesehen werden durch Anpassen der Membrandimension. Dann ist es möglich den gleichen Druckbereich abzudecken unter Verwendung von nur einem Anschluss an der Vakuumkammer. Dies bedeutet auch eine Kostenreduktion für den Anwender. Er braucht weniger Zeit zur Schweissung von Flanschen und weniger Zeit die Sensoren zu verbinden mit dem Datenerfassungssystem.

Die wesentliche Eigenschaft des Sensors entsprechend der vorliegenden Erfindung liegt darin, dass dieser Korrosionsresistent ist bei der Einsatzmöglichkeit bei hohen Temperaturen bei einer Umgebung mit starken EMI (Electro Magnetic Interference) Einflüssen, welche oft vorliegen bei modernen Halbleiterproduktionseinrichtungen.

## Patentansprüche

1. Vakuummesszelle mit einem ersten Gehäusekörper (1) aus Aluminiumoxyd mit einer davon in geringem Abstand angeordneten, im Randbereich Vakuum dichtend angeordneten Membrane (2) aus Aluminiumoxyd, derart dass dazwischen ein Referenzvakuumraum (25) ausgebildet wird, ein zweiter Gehäusekörper (4) aus Aluminiumoxyd gegenüber der Membrane (2) im Randbereich Vakuum dichtend vorgesehen ist und mit dieser einen Messvakuumraum (26) bildet, in welchen Anschlussmittel (5) münden zur Verbindung mit dem zu messenden Medium, **dadurch gekennzeichnet, dass** der erste Gehäusekörper (1) mindestens im Zentrumsbereich ein optisch transparentes Fenster (33) ausgebildet ist und die, diesem zugewandte Oberfläche (31) der Membrane (2) mindestens im Zentrumsbereich optisch reflektierend ausgebildet ist und dass ausserhalb des Referenzvakuumraumes (25) gegenüber und beabstandet von diesem Fenster (33) eine Lichtleitfaser (37) zur Ein- und Auskopplung von Licht auf die Oberfläche (31) der Membrane (2) vorgesehen ist, wobei zwischen der Lichtleitfaser (37) und dem Fenster eine Linse (35) zur optischen Ankopplung an die Membranoberfläche (31) vorgesehen ist, derart dass die Anordnung eine Messstrecke bildet zur Erfassung von Auslenkungen der Membrane (2) mit einem Fabry - Perot Interferometer, und dass die optisch wirksamen Oberflächen möglichst parallel ausgebildet sind, wobei die Summe |α+β+γ| der Winkelabweichung α der beiden Fensteroberflächen und die Winkelabweichung β der Membranoberfläche und die Winkelabweichung γ der reflektierenden Bereichs der Membranoberfläche (31) den Gesamtwert von 0.05 mrad nicht überschreitet.

2. Messzelle nach Anspruch 1, **dadurch gekennzeichnet, dass** die Membrane (2) aus Aluminiumoxyd der Form Saphir besteht.

3. Messzelle nach einem der Ansprüche 1 oder 2, **dadurch gekennzeichnet, dass** der erste Gehäusekörper (1) mindestens teilweise aus Aluminiumoxyd der Form Saphir besteht und dieser Teil im Zentrumsbereich liegt zur Ausbildung eines optisch durchlässigen Fensters (33).

4. Messzelle nach Anspruch (3), **dadurch gekennzeichnet, dass** das Fenster (33) als separates Einsatzteil aus Aluminiumoxyd der Form Saphir ausgebildet ist und Vakuum dichtend im Zentrumsbereich des ersten Gehäuseteil mit einer Dichtung (32) verbunden ist.

5. Messzelle nach einem der vorhergehenden Ansprüche, **dadurch gekennzeichnet, dass** die Membrane (2) für den mindestens reflektierenden Bereich eine Beschichtung (31) aufweist, vorzugsweise eine voll reflektierende Beschichtung (31).

6. Messzelle nach Anspruch 5, **dadurch gekennzeichnet, dass** die reflektierende Beschichtung (31) hauptsächlich ein Edelmetall, vorzugsweise Gold enthält, wobei vorzugsweise zwischen der Oberfläche der Membran (2) und der reflektierenden Beschichtung eine weitere Schicht zur Haftvermittlung vorgesehen ist, die vorzugsweise Chrom enthält.

7. Messzelle nach einem der vorhergehenden Ansprüche, **dadurch gekennzeichnet, dass** die innen liegende Oberfläche (43) des zu mindest teilweise transparenten ersten Gehäuseteils (1) oder des Fensters (33) mit einer teiltransparenten Beschichtung, vorzugsweise einer halbtransparenten Beschichtung versehen ist.

8. Messzelle nach einem der vorhergehenden Ansprüche, **dadurch gekennzeichnet, dass** die Reinheit des Aluminiumoxydes der Membrane (2) mindestens 96 % beträgt, vorzugsweise mindestens 99.5 %.

9. Messzelle nach einem der vorhergehenden Ansprüche, **dadurch gekennzeichnet, dass** die Messzellenanordnung aus dem ersten Gehäuseteil (1), der Membrane (2) und dem zweiten Gehäuseteil (4) mit dem Anschlusstutzen (5) von einer Heizung (30) umgeben ist und diese vorzugsweise als Heizung (30) ausgebildet ist für die Einstellung einer Messzellentemparatur im Bereich von 100° C bis 600°C.

10. Messzelle nach einem der vorhergehenden Ansprüche, **dadurch gekennzeichnet, dass** der Abstand der Lichtleitfaser (37) vom Fenster (33) derart festgelegt ist zusammen mit den Haltemitteln (28'), dass die Temperatur an der Lichtleitfaser 100°C nicht überschreitet.

11. Messzelle nach einem der vorhergehenden Ansprüche, **dadurch gekennzeichnet, dass** die den Referenzvakuumraum (25) einschliessenden innere Oberfläche (34) des ersten Gehäuseteils (1) und die gegenüberliegende Oberfläche der Membrane (2) im Bereich von 2µm bis 50µm beabstandet sind, vorzugsweise 12 bis 35µm.

12. Messzelle nach einem der vorhergehenden Ansprüche, **dadurch gekennzeichnet, dass** der erste Gehäusekörper (1) und der zweite Gehäusekörper (4) mit der dazwischen liegenden Membran (2) im Randbereich symmetrisch und im Wesentlichen spannungsfrei, dichtend verbunden sind.

13. Messzelle nach Anspruch 12, **dadurch gekennzeichnet, dass** die Verbindung als Verschweissung, als Diffusionsverbindung oder vorzugsweise als Lotverbindung, wie insbesondere mit Glaslot, ausgeführt ist.

14. Messzelle nach einem der vorhergehenden Ansprüche, **dadurch gekennzeichnet, dass** die Membrane (2) eine Dicke aufweist im Bereich von 10µm bis 250µm, vorzugsweise von 10µm bis 120µm.

15. Messzelle nach Anspruch 14, **dadurch gekennzeichnet, dass** die mittlere Korngrösse des Membranmateriales ≤ 20µm, vorzugsweise ≤ 10µm, insbesondere < 5µm, beträgt.

16. Messzelle nach Anspruch 14 oder 15, **dadurch gekennzeichnet, dass** im Querschnitt der Membran (2) über die Dicke mindestens 2 Körner, vorzugsweise mindestens 5 Körner vorhanden sind.

17. Messzelle nach einem der vorhergehenden Ansprüche, **dadurch gekennzeichnet, dass** die flächige Unebenheit der Membrane (2) nicht mehr als 10µm, vorzugsweise nicht mehr als 5µm beträgt.

18. Messzelle nach einem der vorhergehenden Ansprüche, **dadurch gekennzeichnet, dass** am oder im ersten Gehäuse (1) ein Volumen (13) zur Aufnahme eines Getters (10) vorgesehen ist, welches eine Verbindung (14) zum Referenzvakuumraum (25) aufweist, wobei das Volumen (13) mit einem Deckel (8) dichtend verschlossen ist.

19. Messzelle nach einem der vorhergehenden Ansprüche, **dadurch gekennzeichnet, dass** der Durchmesser der Zelle im Bereich von 5 bis 80 mm liegt, vorzugsweise im Bereich von 5 bis 40 mm.

20. Verfahren zur Herstellung einer Messzelle nach einem der Ansprüche 1 bis 19 oder Teilen davon, umfassend die folgenden Schritte:
- Herstellung einer ersten Aluminiumoxid Gehäuseplatte (1) mit einem mindestens im Zentrumsbereich optisch transparenten Zone zur Bildung eines Fensters (33) wobei die innere Oberfläche (34) optisch teilreflektierend ausgebildet wird;
- Herstellung einer zweiten Aluminiumoxyd Gehäuseplatte (4) mit einer Leitungsöffnung welche die Oberflächen der Platte (4) verbindet wobei an der Platte (4) ein Anschlusstutzen (5) dichtend und mit der Leitung kommunizierend angebracht wird;
- Herstellung einer Aluminiumoxyd Membrane (2) welche an einer Oberfläche optisch reflektierend ausgebildet wird;
- Montage der Platten (1,4), so dass die Membrane (2) beabstandet zwischen den Platten (1,4) liegt und in deren Randbereich mit den Platten (1,4) umlaufend, vakuumdicht verbunden ist und dass die optisch reflektierenden Oberflächen (31, 34) der ersten Platte (1) und diejenige der Membrane (2) einander gegenüber liegen und einen dazwischen liegenden Referenzvakuumraum (25) begrenzen, und die dem Anschlusstutzen (5) abgewandte Oberfläche der zweiten Platte (4) mit der Membrane (2) einen Messvakuumraum (26) begrenzen;
- und dass ausserhalb des Referenzvakuumraumes (25) gegenüber und beabstandet von diesem Fenster (33) eine Lichtleitfaser (37) zur Ein- und Auskopplung von Licht auf die Oberfläche (31) der Membrane (2) angebracht wird, wobei zwischen der Lichtleitfaser (37) und dem Fenster eine Linse (35) zur optischen Ankopplung an die Membranoberfläche (31) angeordnet wird, derart dass die Anordnung eine Messstrecke bildet zur Erfassung von Auslenkungen der Membrane (2) mit einem Fabry - Perot Interferometer.
- Abpumpen des Referenzvakuumraumes (25) durch die Leitung (14) unter Aktivierung eines mit der Leitung (14) in Verbindung stehenden Getters (10) wobei nach Erreichung des Sollvakuums die Leitung (14) mit dem Getter (10) vakuumdicht (8) verschlossen wird.

21. Verfahren zur Herstellung einer Messzelle nach Anspruch 20, **dadurch gekennzeichnet, dass** die Herstellung der Aluminiumoxyd Membrane (2) folgende Schritte umfasst:
• Membranen werden aus einem Aluminiumoxyd Schlicker geformt,
• daraufhin erfolgt ein erster Heizschritt zur Sinterung der Membrane in einem Ofen mit darauf folgender Abkühlung,
• anschliessend wird in einem zweiten Heizschritt die Membrane nochmals erhitzt und hiermit geglättet und danach abgekühlt.

22. Verfahren nach Anspruch 21, **dadurch gekennzeichnet, dass** ein dritter Heizschritt zur Glättung erfolgt und dass die Sintertemperatur des ersten Heizschrittes gegenüber der Temperatur des oder der nachfolgenden Glättungsheizschritte grösser ist, vorzugsweise nicht grösser als 100°C.

23. Verfahren nach einem der Ansprüche 21 bis 22, **dadurch gekennzeichnet, dass** während dem oder den Glättungsheizschritten die Membrane (2) zwischen planen Platten durch Zusammenpressen, wie insbesondere durch Gewichtsbelastung, geglättet werden.

24. Verfahren nach einem der Ansprüche 20 bis 23, **dadurch gekennzeichnet, dass** eine Heizung (30) um die Messzelle aus erstem Gehäuseteil (1), Membrane (2) und zweitem Gehäuseteil (4) angeordnet wird zum Aufheizen auf eine Temperatur, die im Bereich liegt von 100°C bis 600°C und dass der Abstand der Lichtleitfaser (37, 37') gegenüber dem ersten Gehäusekörper (1) zusammen mit der Halterung (28') derart ausgebildet wird, dass eine Temperatur von 100°C an der Lichtleitfaser (37, 37') nicht überschritten wird.

25. Verwendung der Messzelle nach einem der vorhergehenden Ansprüche für Drücke kleiner 1000 mbar, vorzugsweise kleiner 1 mbar, bei einer Auflösung von besser 1%, vorzugsweise besser 0,3%.

## Claims

1. Vacuum measuring cell with a first housing body (1) of aluminium oxide with an aluminium oxide membrane (2) arranged at a slight distance therefrom and sealing vacuum-tight in the edge area such that in-between a reference vacuum chamber (25) is formed, a second housing body (4) of aluminium oxide is provided sealing vacuum-tight against the membrane (2) in the edge region and together with this forms a measurement vacuum chamber (26) into which open connecting means (5) for connection with the medium to be measured, **characterised in that** the first housing body (1) is formed at least in the central region as an optically transparent window (33) and the surface (31) of the membrane (2) facing this is formed optically reflective at least in the central region, and that outside the reference vacuum chamber (25) and spaced from this window (33) is provided a light-conducting fibre (37) for coupling light into and out of the surface (31) of the membrane (2), wherein between the light-conducting fibre (37) and the window is provided a lens (35) for optical coupling to the membrane surface (31) such that the arrangement forms a measurement section to detect deflections of the membrane (2) with a Fabry-Perot interferometer, and that the optically active surfaces are formed as parallel as possible, wherein the sum [α+ß+γ] of the angle deviation α of the two window surfaces and the angle deviation ß of the membrane surface and the angle deviation γ of the reflective region of the membrane surface (31) does not exceed the total value of 0.05 mrad.

2. Measuring cell according to claim 1, **characterised in that** the membrane (2) is made of aluminium oxide of sapphire form.

3. Measuring cell according to any of claims 1 or 2, **characterised in that** the first housing body (1) consists at least partially of aluminium oxide of the sapphire form and this part lies in the central region to form an optically transparent window (33).

4. Measuring cell according to claim 3, **characterised in that** the window (33) is formed as a separate insert of aluminium oxide of the sapphire form and is connected vacuum-tight in the central region of the first housing part with a seal (32).

5. Measuring cell according to any of the preceding claims, **characterised in that** the membrane (2) for the at least partly reflective region has a coating (31), preferably a fully reflective coating (31).

6. Measuring cell according to claim 5, **characterised in that** the reflective coating (31) contains mainly a precious metal, preferably gold, wherein preferably between the surface of the membrane (2) and the reflective coating is provided a further layer for adhesion promotion which preferably contains chromium.

7. Measuring cell according to any of the preceding claims, **characterised in that** the inner surface (43) of the at least partly transparent first housing part (1) or window (33) is provided with a partly transparent coating, preferably a semi-transparent coating.

8. Measuring cell according to any of the preceding claims, **characterised in that** the purity of the aluminium oxide of the membrane (2) is at least 96%, preferably at least 99.5%.

9. Measuring cell according to any of the preceding claims, **characterised in that** the measuring cell arrangement of the first housing part (1), membrane (2) and second housing part (4) with the connecting piece (5) is surrounded by a heater (30) and this is preferably formed as a heater (30) for setting a measuring cell temperature in the range from 100° to 600°C.

10. Measuring cell according to any of the preceding claims, characterised that the distance of the light-conductive fibre (37) from the window (33) is established together with the retaining means (28') such that the temperature at the light-conducting fibre does not exceed 100°C.

11. Measuring cell according to any of the preceding claims, **characterised in that** the inner surface (34) of the first housing part (1) enclosing the reference vacuum chamber (25) and the opposing surface of the membrane (2) are spaced apart in the range of 2 µm to 50 µm, preferably 12 to 35 µm.

12. Measuring cell according to any of the preceding claims, **characterised in that** the first housing body (1) and the second housing body (4) with the membrane (2) lying in between are symmetrical in the edge region and connected together sealing and substantially without tension.

13. Measuring cell according to claim 12, **characterised in that** the connection is designed as a weld, diffusion connection or preferably a solder connection, such as in particular with glass solder.

14. Measuring cell according to any of the preceding claims, **characterised in that** the membrane (2) has a thickness in the region of 10 µm to 250 µm, preferably 10 µm to 120 µm.

15. Measuring cell according to claim 14, **characterised in that** the mean grain size of the membrane material is ≤ 20 µm, preferably ≤ 10 µm, in particular ≤ 5 µm.

16. Measuring cell according to claim 14 or 15, **characterised in that** in the cross-section of the membrane (2) over the thickness, at least 2 grains, preferably at least 5 grains are present.

17. Measuring cell according to any of the preceding claims, **characterised in that** the superficial unevenness of the membrane (2) is no more than 10 µm, preferably no more than 5 µm.

18. Measuring cell according to any of the preceding claims, **characterised in that** on or in the first housing (1) is provided a volume (13) to receive a getter (10) which has a connection (14) to the reference vacuum chamber (25), wherein the volume (13) is tightly sealed with a cover (8).

19. Measuring cell according to any of the preceding claims, **characterised in that** the diameter of the cells lies in the range of 5 to 80 mm, preferably in the range of 5 to 40 mm.

20. Method for production of a measuring cell according to any of claims 1 to 19 or parts thereof, comprising the following steps:
- production of a first aluminium oxide housing plate (1) with an optically transparent zone at least in the central region to form a window (33), wherein the inner surface (34) is formed optically partly reflective;
- production of a second aluminium oxide housing plate (4) with a conduit opening which connects the surfaces of the plate (4), wherein on the plate (4) a connecting piece (5) is arranged tightly sealed and communicating with the conduit;
- production of an aluminium oxide membrane (2) which is formed optically reflective on a surface;
- mounting of the plates (1, 4) so that the membrane (2) lies spaced between the plates (1, 4) and is connected all round vacuum-tight with the plates (1, 4) in their edge area, and that the optically reflective surfaces (31, 34) of the first plate (1) and of the membrane (2) lie opposite each other and delimit between them a reference vacuum chamber (25), and the surface of the second plate (4) facing away from the connecting piece (5) together with the membrane (2) delimits the measurement vacuum chamber (26);
- and that outside the reference vacuum chamber (25), opposite and spaced from the window (33), is provided a light-conducting fibre (37) for coupling light into and out of the surface (31) of the membrane (2), wherein between the light-conductive fibre (37) and the window is arranged a lens (35) for optical coupling to the membrane surface (31), such that the arrangement forms a measurement section to detect deflections of the membrane (2) with a Fabry-Perot interferometer;
- evacuation of the reference vacuum chamber (25) through the conduit (14) with activation of a getter (10) in connection with the conduit (14), wherein after reaching the nominal vacuum the conduit (14) with the getter (10) is closed vacuum-tight (8).

21. Method for production of a measuring cell according to claim 20, **characterised in that** the production of the aluminium oxide membrane (2) comprises the following steps:
- membranes are formed from an aluminium oxide layer,
- then a first heating step is performed to sinter the membrane in a furnace with subsequent cooling,
- then in a second heating step the membrane is heated again and thus smoothed and then cooled.

22. Method according to claim 21, **characterised in that** a third heating step is carried out for smoothing and that the sintering temperature of the first heating step is higher than the temperature of the subsequent smoothing heating step or steps, preferably no higher than 100°C.

23. Method according to any of claims 21 to 22, **characterised in that** during the smoothing heating step or steps, the membranes (2) are smoothed between flat plates by compression, such as in particular by weight loading.

24. Method according to any of claims 20 to 23, **characterised in that** a heater (30) is arranged around the measuring cell of the first housing part (1), membrane (2) and second housing part (4) for heating to a temperature which lies in the range of 100° to 600°C and that the distance of the light-conducting fibre (37) from the first housing body (1) together with the holder (28') is formed such that a temperature of 100°C is not exceeded at the light-conducting fibre (37).

25. Use of the measuring cell according to any of the preceding claims for pressures of less than 1000 mbar, preferably less than 1 mbar, with a resolution of better than 1%, preferably better than 0.3%.

## Revendications

1. Capteur de mesure à vide comprenant :
- une première portion de boîtier (1) en oxyde d'aluminium,
- une membrane (2) en oxyde d'aluminium, agencée étanche au vide dans sa zone marginale et disposée à une faible distance de ladite première portion de boîtier, de sorte telle qu'une chambre à vide de référence (25) est formée entre les deux,
- une seconde portion de boîtier (4) en oxyde d'aluminium, prévue à l'opposé de la membrane (2), agencée étanche au vide dans sa zone marginale et formant avec ladite membrane une chambre à vide de mesure (26) dans laquelle débouchent des moyens de raccordement (5) au milieu à mesurer,
**caractérisé**
- **par le fait que** la première portion de boîtier (1) comprend, au moins dans sa partie centrale, une fenêtre optiquement transparente (33) et que la face (31) de la membrane (2) orientée vers ladite fenêtre est optiquement réfléchissante, au moins dans sa partie centrale,
- **par le fait qu'**il est prévu, à l'extérieur de la chambre à vide de référence (25), à l'opposé et espacée de ladite fenêtre (33), une fibre optique (37) pour le , couplage et le découplage de lumière sur la face (31) de la membrane (2), tandis qu'une lentille (35) est prévue entre la fibre optique (37) et ladite fenêtre, pour assurer le couplage optique à la surface (31) de la membrane (2), de sorte telle que l'agencement constitue une section de mesure permettant de capter
les déviations de la membrane (2) à l'aide d'un interféromètre de Fabry-Perot
- et **par le fait que** les surfaces optiquement actives sont parallèles, de préférence, tandis que la somme (α+ß+γ) des déviations angulaires α des deux surfaces de fenêtre et la déviation angulaire β de la surface de membrane et la déviation angulaire γ de la zone réfléchissante de la surface de membrane (31) ne dépasse pas la valeur totale de 0,05 mrad.

2. Capteur de mesure selon la revendication 1, **caractérisé par le fait que** la membrane (2) est en oxyde d'aluminium de type saphir.

3. Capteur de mesure selon la revendication 1 ou 2, **caractérisé par le fait que** la première portion de boîtier (1) est au moins pour partie en oxyde d'aluminium de type saphir et que cette partie est disposée dans la zone centrale pour former une fenêtre (33) optiquement transparente.

4. Capteur de mesure selon la revendication 3, **caractérisé par le fait que** la fenêtre (33) est réalisée en tant que pièce séparée en oxyde d'aluminium de type saphir et reliée, dans la zone centrale de la première portion de boîtier, à une garniture d'étanchéité au vide (32).

5. Capteur de mesure selon l'une quelconque des revendications précédentes, **caractérisé par le fait que** la membrane (2) est dotée, dans sa partie réfléchissante, d'un revêtement (31) de préférence totalement réfléchissant.

6. Capteur de mesure selon la revendication 5, **caractérisé par le fait que** le revêtement réfléchissant (31) comprend, pour l'essentiel, un métal précieux, de préférence de l'or, tandis qu'il est prévu, entre la surface de la membrane (2) et le revêtement réfléchissant, une couche supplémentaire d'un agent adhésif comprenant de préférence du chrome.

7. Capteur de mesure selon l'une quelconque des revendications précédentes, **caractérisé par le fait que** la face
intérieure (34) de la première portion de boîtier (1) - au moins partiellement transparente - ou de la fenêtre (33), est dotée d'un revêtement partiellement transparent, de préférence semi-transparent.

8. Capteur de mesure selon l'une quelconque des revendications précédentes, **caractérisé par le fait que** la pureté de l'oxyde d'aluminium de la membrane (2) est d'au moins 96 %, de préférence de 99,5 %.

9. Capteur de mesure selon l'une quelconque des revendications précédentes, **caractérisé par le fait que** l'agencement de capteur composé de la première portion de boîtier (1), de la membrane (2) et de la seconde portion de boîtier (4) comprenant le raccord (5), est entouré d'un dispositif de chauffage (30) configuré, de préférence, pour le réglage d'une température de capteur comprise entre 100°C et 600°C.

10. Capteur de mesure selon l'une quelconque des revendications précédentes, **caractérisé par le fait que** la distance de la fibre optique (37) à la fenêtre (33), moyens de fixation (28') compris, est fixée de sorte telle que la température au niveau de la fibre optique ne dépasse pas 100°C.

11. Capteur de mesure selon l'une quelconque des revendications précédentes, **caractérisé par le fait que** la surface intérieure (34) de la première portion de boîtier (1) et la face opposée de la membrane (2) - qui renferment entre elles la chambre à vide de référence (25) - sont espacées l'une de l'autre d'une distance comprise entre 2 µm et 50 µm, de préférence entre 12 µm et 35 µm.

12. Capteur de mesure selon l'une quelconque des revendications précédentes, **caractérisé par le fait que** la première portion de boîtier (1) et la seconde portion de boîtier (4) sont jointes symétriquement, dans la zone marginale, par une liaison étanche et pour l'essentiel exempte de tensions.

13. Capteur de mesure selon la revendication 12, **caractérisé par le fait que** ladite liaison est réalisée par soudage, par diffusion ou, de préférence, par brasage, en particulier par brasage au verre.

14. Capteur de mesure selon l'une quelconque des revendications précédentes, **caractérisé par le fait que** l'épaisseur de la membrane (2) est comprise entre 10 µm et 250 µm, de préférence entre 10 µm et 120 µm.

15. Capteur de mesure selon la revendication 14, **caractérisé par le fait que** le matériau de la membrane (2) présente une granulométrie moyenne de ≤ 20 µm, de préférence de ≤ 10 µm, en particulier de ≤ 5 µm.

16. Capteur de mesure selon la revendication 14 ou 15, **caractérisé par** la présence d'au moins 2 grains, de préférence au moins 5 grains, dans l'épaisseur de la membrane (2) en section transversale.

17. Capteur de mesure selon l'une quelconque des revendications précédentes, **caractérisé par le fait que** le défaut de planéité de la membrane (2) est de 10 µm au maximum, de préférence de 5 µm au maximum.

18. Capteur de mesure selon l'une quelconque des revendications précédentes, **caractérisé par** la présence, dans ou sur la première portion de boîtier (1), d'un espace (13) pour loger un getter (10), lequel espace, fermé hermétiquement par le biais d'un couvercle (8), possède une liaison (14) vers la chambre à vide de référence (25).

19. Capteur de mesure selon l'une quelconque des revendications précédentes, **caractérisé par le fait que** le diamètre dudit capteur est compris entre 5 et 80 mm, de préférence entre 5 et 40 mm.

20. Méthode de fabrication d'un capteur de mesure selon l'une quelconque ou certaines parties des revendications 1 à 19 et comprenant les étapes suivantes :
- Fabrication d'une première plaque de boîtier (1) en oxyde d'aluminium comprenant, au moins dans sa partie centrale, une zone optiquement transparente formant une fenêtre (33) dont la surface intérieure (34) est optiquement partiellement réfléchissante ;
- Fabrication d'une seconde plaque de boîtier (4) en oxyde d'aluminium comprenant une ouverture sous la forme d'une conduite reliant les surfaces de ladite plaque, et montage étanche sur la plaque (4) d'un raccord (5) communiquant avec ladite conduite ;
- Fabrication d'une membrane (2) en oxyde d'aluminium dotée d'une surface optiquement réfléchissante ;
- Assemblage des plaques (1, 4) de sorte telle que la membrane (2) est disposée entre lesdites plaques, espacée de celles-ci tout en y étant reliée, étanche au vide, sur le pourtour de leurs zones marginales, et de sorte telle que les surfaces réfléchissantes (34, 31) respectivement de la première plaque (1) et de la membrane (2) se font face en délimitant entre elles une chambre à vide de référence (25) et que la surface de la seconde plaque (4) opposée au raccord (5) délimite avec la membrane (2) une chambre à vide de mesure (26) ;
- Montage, à l'extérieur de la chambre à vide de référence (25), à l'opposé et espacée de la fenêtre (33), d'une fibre optique (37) pour le couplage et le découplage de lumière sur la face (31) de la membrane (2), tandis qu'une lentille (35) est agencée entre la fibre optique (37) et ladite fenêtre, pour assurer le couplage optique à la surface (31) de la membrane, de sorte telle que l'agencement constitue une section de mesure permettant de capter les déviations de la membrane (2) à l'aide d'un interféromètre de Fabry-Perot ;
- Evacuation de la chambre à vide de référence (25) à travers la conduite (14), par l'activation d'un getter (10) connecté à ladite conduite et, lorsque le vide nominal est atteint, fermeture étanche au vide (8) de la conduite avec le getter (10).

21. Méthode de fabrication d'un capteur de mesure selon la revendication 20, **caractérisée par le fait que** la fabrication de la membrane (2) en oxyde d'aluminium comprend les étapes suivantes :
- Façonnage de membranes à partir d'une suspension à l'oxyde d'aluminium ;
- Première phase de chauffe pour fritter la membrane dans un four, puis refroidissement ;
- Deuxième phase de chauffe pour échauffer de nouveau la membrane et la lisser, avant de la refroidir.

22. Méthode selon la revendication 21, **caractérisée par** une troisième phase de chauffe pour réaliser le lissage, et par le fait que la température de frittage de la première phase de chauffe est supérieure à celle de la phase ou des phases de chauffe de lissage subséquentes, de préférence supérieure d'au maximum 100°C.

23. Méthode selon la revendication 21 ou 22, **caractérisée par le fait que** l'on lisse la membrane (2), au cours de la ou des phases de chauffe de lissage, entre deux plaques planes pressées l'une contre l'autre, en particulier en les chargeant d'un poids.

24. Méthode selon l'une quelconque des revendications 20 à 23, **caractérisée par** la mise en place, autour du capteur de mesure comprenant la première portion de boîtier (1), la membrane (2) et la seconde portion de boîtier (4), d'un dispositif de chauffage (30) pour porter la température à un niveau compris entre 100°C et 600°C, et par le fait que l'espacement de la fibre optique (37, 37') à l'égard de la première portion de boîtier (1), moyens de fixation (28') compris, est prévu de sorte telle qu'au niveau de ladite fibre optique la température ne dépasse pas 100°C.

25. Utilisation du capteur de mesure selon l'une quelconque des revendications précédentes pour des pressions inférieures à 1000 mbar, de préférence inférieures à 1 mbar, pour une résolution meilleure que 1%, de préférence meilleure que 0,3%.
